# EUROPEAN PATENT APPLICATION

(11) **EP 4 753 110 A1**
(43) Date of publication of application: **03.06.2026**
(21) Application number: 25214341.7
(22) Date of filing: 07.11.2025
(51) Int. Cl.: H02K 1/02, H02K 1/17, H02K 21/22, H02K 21/30, H02K 5/08, H02K 1/2792

(54) **DIRECT CURRENT MOTOR INTEGRATED WITH WHEEL AND TIRE, AND DIRECT CURRENT MOTOR INTEGRATED WITH FLEXIBLE COVER**

(30) Priority: 29.11.2024 PL 45040424
(71) Applicant: Politechnika Warszawska, 00-661 Warszawa (PL)
(72) Inventor: Piotr, Bartkowski, 02-691 Warsaw (PL); Marta, Ciemiorek Bartkowski, 02-691 Warsaw (PL); Siddhi G., Chevale, 00-631 Warsaw (PL); Lukasz, Pawliszak, 02-646 Warsaw (PL)
(74) Representative: JWP Patent & Trademark Attorneys

(57) **Abstract**

The object of the invention is a DC motor consisting of a cylinder-shaped stator and a rotor, characterized in that the stator (7) is composed of coils (3) radially arranged around the shaft (5) constituting the central element of the stator (7), wherein the coils consist of a wound conducting wire (9) on the ferromagnetic core (8), wherein a part of the stator is a cylinder-shaped stator (4) housing attached to the shaft (5) on the outer side with respect to the coils (3), on one side of the stator (7) base, wherein the rotor (11) is built with permanent magnets alternately arranged in a circle, magnetized in accordance with the Halbach system (1), and permanent magnets with indirect magnetization (2) formed from NdFeB filings embedded in silicone rubber, wherein the magnets, when connected, are part of the deformable tyre of the drive wheel, wherein there is an opening (10) in the stator (7) housing (4), through which the power cables (6) are fed.

A further object of the invention is a DC motor consisting of a cylinder-shaped rotor and a stator, characterized in that the rotor (7) is composed of coils (5) radially arranged around the shaft (5) constituting the central element of the rotor (7), wherein the coils consist of a wound conducting wire (9) on the ferromagnetic core (8), wherein a part of the rotor is a cylinder-shaped rotor (4) housing attached to the shaft (5) on the outside with respect to the coils (3), on one side of the rotor (7) base, wherein the stator (11) is built with permanent magnets alternately arranged in a circle, magnetized in accordance with the Halbach system (1), and permanent magnets with indirect magnetization (2) formed from NdFeB filings embedded in silicone rubber, wherein the magnets, when connected, are part of the deformable rotor sheath, wherein there is an opening (10) in the rotor (7) housing (4), through which the power cables (6) are fed.

## Description

The object of the invention is a DC motor that is integrated with the wheel and tyre, and a DC motor that is integrated with the flexible sheath, the motor having an inverted rotor and stator configuration. In particular, the motor is a type of brushless motor.

### State Of The Art

The growing popularity of electomobility forces engineers and scientists to look for new drive solutions. From the point of view of the design space, the integration of vehicles or robots, it is beneficial that electric motors are integrated with the hub or the entire wheel. These types of solutions already became popular a few years ago.

Wu Z. et al., 2022, "The soft NdFeB/Ecoflex composites for soft robot with a considerable magnetostimulated shrinkability", discloses the possibility of producing permanent magnets, classically used in DC motors, created from NdFeB powder mixed in a matrix made of silicone rubber such as ecoflex 003- or another. These types of magnets allow for deformation. These types of magnets are also presented in Shin G et al., 2023, "Soft electromagnetic artificial muscles using high-density liquid-metal solenoid coils and bistable stretchable magnetic housings", which describes soft artificial electromagnetic muscles (SEAM) that use electric current. SEAM components are microfluidic coils, stretch magnets, ferromagnetic silicone, and stretchable housings.

Similarly, L. Swanepoel et al., 2021, "A Facile Magnetic System for Tracking of Medical Devices". Adv. Mater. Technol. discloses, also in medical use, a magnetic system for the subcutaneous location of medical devices. It consists of a light and flexible, biocompatible and permanent magnet on the tip of the subcutaneous device and a sensor scanning the skin surface and locating the magnetic tip.

Kohls N.D et al., 2023, "Soft electromagnetic motor and soft magnetic sensors for synchronous rotary motion" presents a solution of a flexible rotary motor, in which the coils are made of a flexible material that allows for changing the shape.

Korean Patent KR101866191B1 discloses a portable folding drone that consists of: an upper member; a lower member distant from the upper member in a vertical direction; an arm guide formed to protrude from the upper member and folding or unfolding in a vertical direction with the folding part. The drone also includes a propeller support body sliding along the arm guide in which the propeller is mounted.

US11117661B2 discloses a multipatch drone that includes at least one rotor disposed on the drone structure, the drone structure comprising the drone body and at least two groups of arms, each group of arms comprising a plurality of arms and an axis of rotation separated from the axis of rotation of each other group of arms, and wherein each arm of each group is rotationally mounted on the drone body about the axis of rotation of said group of arms between a position unfolded for flight and a position folded for transport.

However, the integration of the motor is still only related to the wheel hub or rim, and the tyre, or in the case of drones, the flexible housing, is still an additional element. In the case of the drive in pocket drones, the problem is also the lack of protection of the drone drive against mechanical damage.

### Technical Problem

The object of the present invention is to provide a DC motor whose external rotor or stator generates a magnetic field but at the same time is flexible and allows for deformation. Thus, the outer rotor or stator can be used as a tyre of the vehicle or robot wheel or as a flexible motor sheath in the drone. The greatest asset and advantage of the solution is the construction of the external motor housing containing an integrated magnetic field generator, which, due to its construction, has the possibility of deformation, with the housing being at the same time a motor rotor generating a magnetic field or, in the case of a drone, a stator, which constitutes a flexible sheath.

### Summary of the invention

The object of the invention is a DC motor consisting of a cylinder-shaped stator and a rotor, characterized in that the stator is composed of coils radially arranged around the shaft constituting the central element of the stator, wherein the coils consist of a wound conducting wire on the ferromagnetic core, wherein a part of the stator is a cylinder-shaped stator housing attached to the shaft on the outside with respect to the coils, on one side of the stator base, wherein the rotor is built with permanent magnets alternately arranged in a circle, magnetized in accordance with the Halbach system and permanent magnets with indirect magnetization formed from NdFeB filings embedded in silicone rubber. The magnets, when connected, are part of the deformable tyre of the drive wheel. There is an opening in the stator housing through which the power cables are fed. Preferably, the number of coils is twelve or fewer. Preferably, the conducting wire is made of copper or aluminium alloy. Preferably, the rubber in the permanent magnets is Ecoflex 0030 rubber. Preferably, the rubber has a Young's modulus of less than 10 MPa. Preferably, the number of magnets forming the tyre is at least two. Preferably, the number of magnets forming the tyre is a maximum of fourteen. Preferably, the number of magnets forming the tyre is a maximum of one hundred. Preferably, the DC motor is characterized in that there are four elongated openings symmetrically arranged on opposite sides of the shaft in the stator housing.

Another object of the invention is a DC motor, consisting of a cylinder-shaped rotor and a stator. The rotor is composed of coils radially arranged around the shaft constituting the central element of the rotor, wherein the coils consist of a wound conducting wire on the ferromagnetic core, wherein a part of the rotor is a cylinder-shaped rotor housing attached to the shaft on the outside with respect to the coils, on one side of the rotor base, wherein the stator is built with permanent magnets alternately arranged in a circle, magnetized in accordance with the Halbach system and permanent magnets with indirect magnetization formed from NdFeB filings embedded in silicone rubber, wherein the magnets, when connected, are part of the deformable rotor sheath, wherein the rotor sheath has an opening through which the power cables are fed. Preferably, the number of coils is twelve or fewer. Preferably, the conducting wire is made of copper or aluminium alloy. Preferably, the rubber in the permanent magnets is Ecoflex 0030 rubber. Preferably, the rubber has a Young's modulus of less than 10 MPa. Preferably, the number of magnets forming the sheath is at least two. Preferably, the number of magnets forming the sheath is a maximum of fourteen. Preferably, the number of magnets forming the sheath is a maximum of one hundred. Preferably, the DC motor is characterized in that there are four elongated openings symmetrically arranged on opposite sides of the shaft in the rotor housing.

### Explanation of Figures

The object of the present invention is explained in the embodiments in the drawing, in which:
Figs. 1-4 show a general concept,
Fig. 5 shows a deforming device,
Fig. 6 shows an example of the application of the solution in a robot,
Fig. 7 shows an example of the application in a drone in exploded mode,
Fig. 8 shows an example of the application of the solution in a drone in a folded mode.

### Embodiments of the invention

In the list of designations, the designations 7- stator/rotor and 11- rotor/stator were used interchangeably, because in one embodiment the motor element performing the function of a rotor in other embodiments is a stator, and the motor element performing the function of a stator in other embodiments is a rotor.

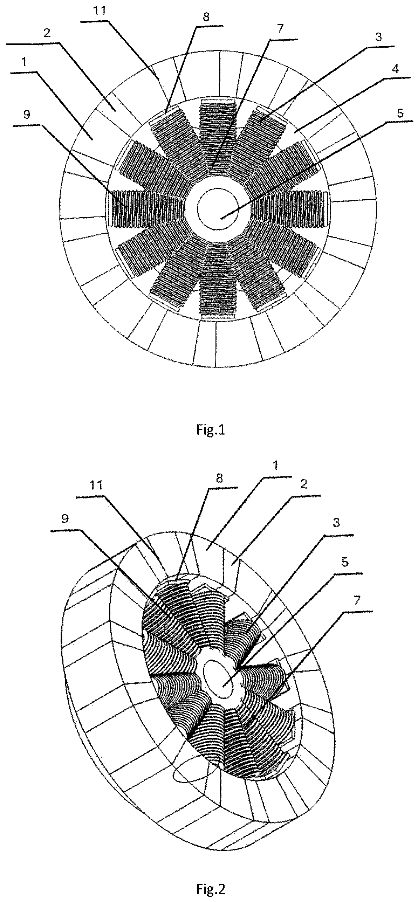

The solution according to the invention is a DC motor, including a cylinder-shaped stator and a rotor. The motor according to the invention with an external diameter of 60mm may have a magnetic field inside about 0.03 T. This motor allows to achieve a maximum power of about 100W. The maximum torque possible to obtain is about 0.01 Nm. The motor is graphically shown in Fig. 1 to Fig. 5. The stator 7 is composed of coils 3 radially arranged around the shaft 5 constituting the central element of the stator 7. The coils may be twelve or fewer, and the coils consist of a wound copper conducting wire 9 on the ferromagnetic core 8. Part of the stator is a cylinder-shaped stator 4 housing attached to the shaft 5 on the outside with respect to the coils 3, on one side of the stator 7 base. In turn, the rotor 11 is made of permanent magnets alternately arranged in a circle, magnetized in accordance with the Halbach system 1 and permanent magnets with indirect magnetization 2, formed from NdFeB filings embedded in silicone rubber of the Ecoflex type 0030 or other elastomer, has a Young's modulus of less than 10 MPa. The number of magnets 1 and 2 forming the tyre is fourteen or fewer. The magnets, when connected, are part of the deformable tyre of the drive wheel, wherein there is an opening 10 in the stator 7 housing 4 through which the power cables 6 are fed. In addition, in the housing 4 of the stator 7 there are four elongated openings 12 symmetrically arranged on opposite sides of the shaft 5, whose task is to cool the motor during operation.

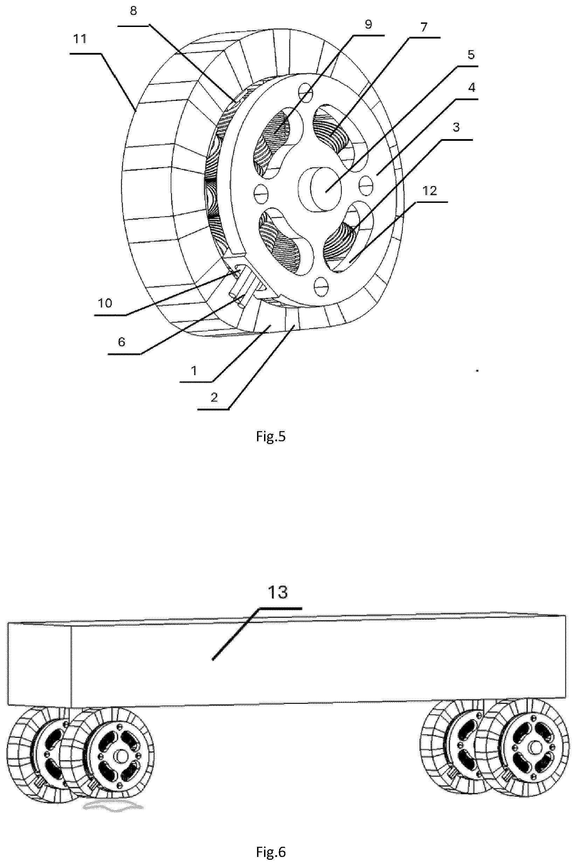

The proposed solution, a motor integrated with the tyre, can be used for installation in vehicles such as cars or robots, where it would serve as a drive, while performing classic functions for the tyre, i.e. increasing traction or reducing vibrations transmitted to the structure. The solution is shown in Fig. 6, wherein in an exemplary robot there are mounted four motors integrated with the tyre according to the proposed solution, which are connected to the vehicle 13 body. The motors integrated with the tyre were mounted in positions where the vehicle wheels are normally located. The embodiment in Fig. 6 also shows how the tyre, being the source of the magnetic field, mounted in the robot, may deform when hitting an obstacle.

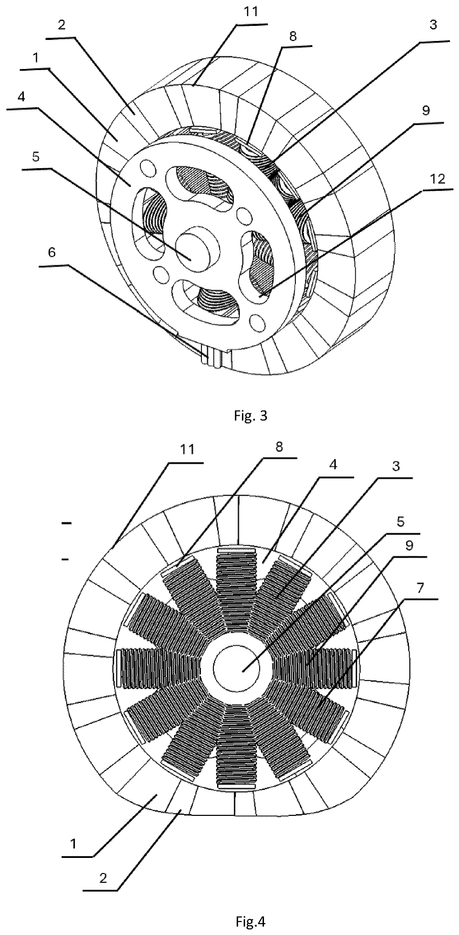

The possibilities of tyre deformation of the drive wheel are presented in detail in Fig. 4 and Fig. 6. Such a wheel, under the influence of external forces, may undergo easy deformation, acting in a manner similar to a classic tyre, and it differs in that the tyre is also a source of a magnetic field.

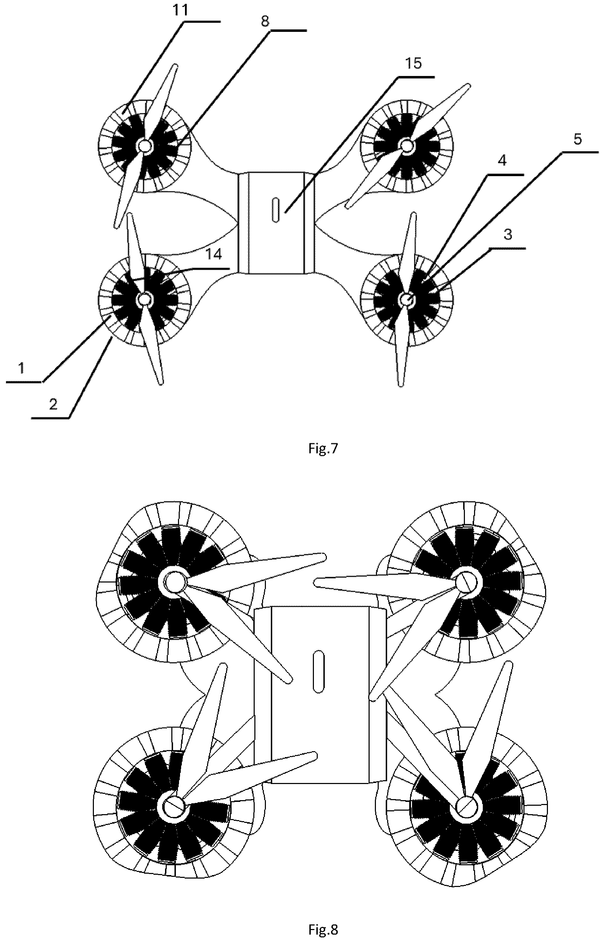

In a further embodiment, the solution of the invention may be used to build drones as depicted in Fig. 7. In the drone, the rotor 11 constituting the outer magnetic ring of the motor, performing in the previous embodiments the function of a tyre and serving as a drive, in this solution, thanks to its flexible structure, performs the functions of an impact absorbing sheath or contact with another object after folding the propellers 14 in the case when, for example, the device is folded. This is especially useful for drones used by uniformed services, which, when folded, could be compatible with the uniform (matched to the size and shape of the uniform pocket) without adversely affecting the wearing comfort. In the drone solution, four or more motors connected to the frame 15 are optimally mounted. In drones, the motors can be mounted to the arms of the drone made of plastic, or the entire structure of the drone can be made of silicone rubber, which allows for even greater compatibility of the drone when the propellers 13 are folded. In the drone, the propeller can be mounted to the rotor housing 4. The motor in the drone is also powered by means of cables, which are terminated with special tips enabling rotation, which are known from the prior art.

### Advantages, industrial applicability

This type of solution can find many interesting solutions in the broadly understood electromobility or robotics. The motor can be used to build motor vehicles as well as small and large robots. Undoubtedly, the greatest advantage of the solution is the construction of the tyre, which at the same time is a motor rotor generating a magnetic field. The motor may also be used in drones in which the rotor and stator functions have been reversed and the stator, constituting the impact absorbing sheath, is located externally to the rotor, i.e. opposite than in the motor installed in wheeled vehicles.

### List of reference symbols

- 1-: flexible permanent magnet magnetized according to the Halbach system
- 2 -: flexible permanent magnet with indirect magnetization
- 3 -: coil - electrically conductive copper stator winding
- 4 -: stator housing ensuring safety against damage and maintaining the appropriate temperature by allowing air flow
- 5 -: shaft
- 6 -: power cables
- 7 -: stator/rotor
- 8 -: coil ferromagnetic core
- 9 -: electrically conductive wire
- 10-: opening in the stator housing for power cables
- 11-: rotor/stator
- 12-: elongated openings in the stator/rotor housing for airflow
- 13-: body
- 14-: propellers
- 15-: drone frame

### [Citation List]

1. Wu Z., Wang Q., Huang J., Yue Y., Chen D., Shi Y., Su B., The soft NdFeB/Ecoflex composites for soft robot with a considerable magnetostimulated shrinkability, Composites Sci. and Tech.,Vol.217,2022. https://doi.org/10.1016/j.compscitech.2021. 109129.
2. Shin G., Choi Y., Jeon B., Coi I., Song S., Park Y.L.,Soft electromagnetic artificial muscles using high-density liquid-metal solenoid coils and bistable stretchable magnetic housings, Adv. Funct. Mater. 2023, 2302895. DOI: 10.1002/adfm.2023028953.
3. Swanepoel L., Alsharif N., Przybysz A., Fourie P., Goussard P., Khan M. A., Almansouri A., Kosel J., A Facile Magnetic System for Tracking of Medical Devices. Adv. Mater. Technol. 2021, 6, 2100346. https://doi.org/10.1002/admt.202100346
4. Kohls ND, Balak R, Ruddy BP, Mazumdar YC. Soft Electromagnetic Motor and Soft Magnetic Sensors for Synchronous Rotary Motion. Soft Robot. 2023 Oct;10(5):912-922. doi: 10.1089/soro.2022.0075. Epub 2023 Mar 28. PMID: 36976757

## Claims

1. A DC motor comprising a cylinder-shaped stator and a rotor, **characterized in that** the stator (7) is composed of coils (5) radially arranged around the shaft (5) constituting the central element of the stator (7), wherein the coils consist of a wound conducting wire (9) on the ferromagnetic core (8), wherein a part of the stator is a cylinder-shaped stator (4) housing attached to the shaft (5) on the outside with respect to the coils (3), on one side of the stator (7) base, wherein the rotor (11) is built with permanent magnets alternately arranged in a circle, magnetized in accordance with the Halbach system (1), and permanent magnets with indirect magnetization (2) formed from NdFeB filings embedded in silicone rubber, wherein the magnets, when connected, are part of the deformable tyre of the drive wheel, wherein there is an opening (10) in the stator (7) housing (4), through which the power cables (6) are fed.

2. The DC motor according to claim 1, **characterized in that** the number of coils (3) is twelve or fewer.

3. The DC motor according to claim 1 or 2, **characterised in that** the conducting wire (9) is made of copper or aluminium alloy.

4. The DC motor according to any one of claims 1 to 3, **characterised in that** the rubber in the permanent magnets (1) and (2) is Ecoflex 0030 rubber.

5. The DC motor according to claim 4, **characterized in that** the rubber has a Young's modulus of less than 10 MPa.

6. The DC motor according to any one of claims 1 to 5, **characterised in that** the number of magnets (1) and (2) forming the tyre is at least two.

7. The DC motor according to claim 6, **characterized in that** the number of magnets (1) and (2) forming the tyre is a maximum of fourteen.

8. The DC motor according to claim 6, **characterized in that** the number of magnets (1) and (2) forming the tyre is a maximum of one hundred.

9. The DC motor according to any one of claims 1 to 8, **characterized in that** in the housing (4) of the stator (7) there are four elongated openings (12) symmetrically arranged on opposite sides of the shaft (5).

10. A DC motor comprising a cylinder-shaped rotor and a stator, **characterized in that** the rotor (7) is composed of coils (5) radially arranged around the shaft (5) constituting the central element of the rotor (7), wherein the coils consist of a wound conducting wire (9) on the ferromagnetic core (8), wherein a part of the rotor is a cylinder-shaped rotor (4) housing attached to the shaft (5) on the outside with respect to the coils (3), on one side of the rotor (7) base, wherein the stator (11) is built with permanent magnets alternately arranged in a circle, magnetized in accordance with the Halbach system (1), and permanent magnets with indirect magnetization (2) formed from NdFeB filings embedded in silicone rubber, wherein the magnets, when connected, are part of the deformable rotor sheath, wherein there is an opening (10) in the rotor (7) housing (4), through which the power cables (6) are fed.

11. The DC motor according to claim 10, **characterized in that** the number of coils (3) is twelve or fewer.

12. The DC motor according to claim 10 or 11, **characterised in that** the conducting wire (9) is made of copper or aluminium alloy.

13. The DC motor according to any one of claims 10 to 12, **characterised in that** the rubber in the permanent magnets (1) and (2) is Ecoflex 0030 rubber.

14. The DC motor according to claim 13, **characterized in that** the rubber has a Young's modulus of less than 10 MPa.

15. The DC motor according to any one of claims 10 to 14, **characterised in that** the number of magnets (1) and (2) forming the sheath is at least two.

16. The DC motor according to claim 15, **characterized in that** the number of magnets (1) and (2) forming the sheath is a maximum of fourteen.

17. The DC motor according to claim 15, **characterized in that** the number of magnets (1) and (2) forming the sheath is a maximum of one hundred.

18. The DC motor according to any one of claims 10 to 17, **characterized in that** in the rotor (7) housing (4) there are four elongated openings (12) symmetrically arranged on opposite sides of the shaft (5).
